(19) Europäisches Patentamt
European Patent Office
Office européen des brevets

(11) **EP 3 729 040 B1**

(12) **EUROPÄISCHE PATENTSCHRIFT**

(45) Veröffentlichungstag und Bekanntmachung des Hinweises auf die Patenterteilung:
**24.04.2024   Patentblatt 2024/17**

(21) Anmeldenummer: **18808306.7**

(22) Anmeldetag: **22.11.2018**

(51) Internationale Patentklassifikation (IPC):
**G01M 13/04** *(2019.01)*     **F03D 7/04** *(2006.01)*
**G05B 23/02** *(2006.01)*

(52) Gemeinsame Patentklassifikation (CPC):
**G01M 13/04; F03D 17/00; F03D 80/70;**
**F16C 17/246; G05B 23/0254;** F05B 2240/50;
F05B 2260/84; Y02E 10/72

(86) Internationale Anmeldenummer:
**PCT/EP2018/082292**

(87) Internationale Veröffentlichungsnummer:
**WO 2019/120871 (27.06.2019 Gazette 2019/26)**

(54) **MODELLBASIERTES VERFAHREN UND SYSTEM ZUR ZUSTANDSÜBERWACHUNG EINES GLEITLAGERS, INSBESONDERE FÜR WINDKRAFTANLAGEN**

MODEL-BASED METHOD AND SYSTEM FOR MONITORING THE CONDITION OF A SLIDING BEARING, PARTICULARLY FOR WIND TURBINES

PROCÉDÉ BASÉ SUR UN MODÈLE ET SYSTÈME DE SURVEILLANCE D'ÉTAT D'UN PALIER LISSE, EN PARTICULIER POUR DES ÉOLIENNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2017   DE 102017223418**

(43) Veröffentlichungstag der Anmeldung:
**28.10.2020   Patentblatt 2020/44**

(73) Patentinhaber:
• **ZF Friedrichshafen AG**
  **88046 Friedrichshafen (DE)**
• **ZF Wind Power Antwerpen NV**
  **3920 Lommel (BE)**

(72) Erfinder:
• **WOLF, Daniel**
  **88048 Friedrichshafen (DE)**

• **KUTLUAY, Ümit**
  **88048 Friedrichshafen (DE)**
• **GEENS, Luk**
  **2547 Lint (BE)**
• **SCHÄFER, Johannes**
  **88048 Friedrichshafen (DE)**
• **TENCKHOFF, Georg**
  **88048 Friedrichshafen (DE)**

(56) Entgegenhaltungen:
| | |
|---|---|
| **EP-A1- 2 048 562** | **WO-A1-2011/023209** |
| **WO-A1-2014/174097** | **AT-U2- 7 889** |
| **DE-A1- 3 117 060** | **US-A1- 2011 188 988** |
| **US-A1- 2017 122 838** | |

**Beschreibung**

Die vorliegende Erfindung betrifft ein Verfahren zur Zustandsüberwachung eines mit Schmieröl betriebenen Gleitlagers für ein rotierendes Bauteil, gemäß dem beigefügten Anspruch 1.

Weiterhin betrifft die Erfindung auch ein System zur Zustandsüberwachung eines mit Schmieröl betriebenen Gleitlagers mit einem solchen Verfahren und eine Maschine oder Anlage, vorzugsweise eine Windkraftanlage, die mit dem besagten System ausgestattet ist. Ferner ist auch ein das vorgenannte Verfahren verkörperndes Computerprogrammprodukt angegeben.

Das Einsatzgebiet der Erfindung erstreckt sich auf hydrostatische oder hydrodynamische Gleitlager für schwere Wellen als rotierendes Bauteil, die vornehmlich im Bereich des Kraftfahrzeugbaus, der Schiffstechnik sowie des Maschinen- und Anlagenbaus zum Einsatz kommen. Als schwere Wellen werden im Rahmen dieser Anwendungen insbesondere Antriebswellen mit einem Wellendurchmesser zwischen 30 und 300 mm verstanden. Es sind jedoch auch kleinere oder größere Wellendurchmesser denkbar, falls diese mit einer Drehlagerung der hier gattungsgemäßen Art ausgestattet werden können, insbesondere einer Schmierölversorgung des Lagerspalts zugänglich sind. Die Wellen der hier interessierenden Art finden sich beispielsweise in Windkraftanlagen zur Lagerung von Getriebebauteilen, wie beispielsweise Zahnrädern, Zahnradpaarungen und hiermit zusammenwirkende Wellen. Ebenso sind Anwendungen denkbar, die sich auf eine Lagerung anderer rotierender Bauteile, wie beispielsweise einer Rotorwelle des Antriebsstrangs zwischen Rotor und Getriebeeingang oder auch einer Lagerung eines Rotorblatts an einer Nabe beziehen, bei welcher der Pitch des Rotorblatts verstellbar ist. Prinzipiell lässt sich die erfindungsgemäße Lösung auf axiale und radiale Gleitlageranordnungen sowie Kombinationen hieraus anwenden. Neben einer drehenden Welle als rotierendes Bauteil ist es auch möglich, dass dieses im Sinne einer kinematischen Umkehr als ein um eine stehende Welle rotierendes Bauteil ausgebildet ist. Die US 2011/0188988 A1 beschreibt eine technische Lösung für eine Gleitlagerung eines Rotors an einer Nabe einer Windkraftanlage, welche hier als Axiallagerung ausgebildet ist. Die Axiallagerung wirkt auf einander gegenüberliegende Ringflächen einer seitens des proximalen Endes eines Rotorblatts angeordneten Drehschiene ein. Der Zustand des sich im Lagerspalt befindlichen Schmieröls wird hier gemäß einer ersten beschriebenen Ausführungsform über einen Drucksensor ermittelt, welcher seitens der Lagerschale oder der Welle angeordnet den Lagerspaltdruck misst, woraus eine Steuereinheit Einfluss auf die Pumpenansteuerung des Druckschmierungskreises und/oder den Betrieb der Windkraftanlage nimmt, beispielsweise auf deren dynamischen Zustand. Gemäß einer anderen hier beschriebenen Ausführungsform basiert diese Steuerung auf einer sensortechnischen Ermittlung der Temperatur des Schmieröls im Lagerspalt der Gleitlagerung. Die dort herrschende Temperatur ist ein Indikator für die Belastung des Rotorblatts. Schließlich wird gemäß einer weiteren Ausführungsform vorgeschlagen, dass die Schmierfilmdicke im Lagespalt des Gleitlagers - welche der aktuellen Dicke des Lagerspalts an der engsten Stelle entspricht - sensortechnisch ermittelt wird, auf dessen Basis die vorgenannte Steuerung ebenfalls durchgeführt werden kann. Falls die Schmierfilmdicke unter einen vordefinierten Mindestwert fällt, so lässt sich hieraus eine Überbelastung des Rotorblatts ableiten.

Die US 2012/0068460 A1 offenbart eine radiale Gleitlageranordnung für eine gegenüber der vorgenannten Lösung des Standes der Technik im Normalbetrieb schneller drehend umlaufende Antriebswelle eines Antriebsstrangs einer Windkraftanlage. Ein Gleitlager bildet hier die rotornabenseitige Lagerstelle der Antriebswelle. Die Gleitlageranordnung umfasst ebenfalls einen Sensor, der an geeigneter Stelle die Spaltbreite und damit ebenfalls die Schmierfilmdicke des sich im Lagerspalt befindlichen Schmieröls misst, um ausgehend von dem Messwert die Pumpe eines Druckschmierungskreises sowie einen Liftaktuator der Gleitlageranordnung anzusteuern, mit dessen Hilfe die Welle in verschiedenen hydrodynamischen Betriebsmodi lagerbar ist. Weitere Dokumente, die zum Stand der Technik gehören, sind die EP2048562 A1, DE3117060 A1, und weiter auch WO 2014/174097 A1, US 2011/188988 A1, WO 2011/023209 A1 und AT7889 U2.

Ferner gehen aus dem allgemein bekannten Stand der Technik, insbesondere für Windkraftgetriebe mit mindestens einer getriebeeingangsseitigen Planetenstufe, auch Gleitlagerungen drehender Bauteile hervor, beispielsweise einer abtriebsseitigen Sonnenwelle gegenüber dem Getriebegehäuse oder der Planetenräder am Planetenträgerbolzen als stehende Welle. Diese Gleitlagerungen sind gewöhnlich an einen getriebeinternen Druckschmierkreis zur permanenten Versorgung mit Schmieröl angeschlossen, der mit Sensoren zur Zustandsüberwachung der Druckschmierung ausgestattet sein kann.

Werden Gleitlager der hier interessierenden Art hydrodynamisch betrieben, so sind diese theoretisch verschleißfrei. Wechselnde Betriebszustände der eine Gleitlagerung umfassenden Maschine oder Anlage sowie Störungen in der Druckschmierung können zu einer Funktionsunterbrechung der Gleitlagerung führen und einen Verschleiß, Schädigung oder sogar Ausfall der Lagerstelle herbeiführen. Der Schmierspalt im Gleitlager, hauptsächlich die kritische minimale Spaltdicke, beträgt gewöhnlich wenige Mikrometer und bietet Aufschluss darüber, in welchem Betriebszustand sich das Gleitlager befindet. Als typische Betriebszustände des Gleitlagers gelten der Zustand der Mischreibung, in welchem bei beispielsweise ansteigender Drehzahl eine Welle noch nicht vollständig von der zugeordneten Lagerschale abgehoben ist oder der sich bei weiter steigender Drehzahl hieran anschließende hydrodynamische Zustand, in welchem im Bereich der Nenndrehzahl ein tragender Schmierölfilm besteht.

Mit weiteren einfach zu messenden lagercharakteristischen physikalischen Größen, beispielsweise der Schmieröltemperatur, kann die Last im Gleitlager berechnet werden und auf das Drehmoment im Antriebsstrang geschlossen werden. Allerdings gestaltet sich die Messung der Spaltdicke im Gleitlager deshalb problematisch, weil ein hierfür gewöhnlich zum Einsatz kommender Kontakt- oder Abstandssensor auch nach einem verschleißbedingten Materialabtrag an Lageroberflächen nicht touchiert werden darf und die Positionierung des Sensors in einer Vertiefung die Lagergeometrie sowie Hydrodynamik beeinträchtigt, so dass die Lagertragfähigkeit abnehmen würde. Zudem sind insbesondere Abstandssensoren zur Messung der Exzentrizität eines Gleitlagers aufgrund der erforderlichen Auflösung recht empfindlich und haben einen geringen Messbereich, so dass eine dichte Anordnung an der Messstelle erforderlich ist, was wiederum den herrschenden Anforderungen an die Robustheit der Gleitlageranordnung widerspricht.

Es ist daher die Auflage der vorliegenden Erfindung, ein Verfahren und System zur Zustandsüberwachung eines mit Schmieröl betriebenen Gleitlagers dahingehend weiter zu verbessern, dass ohne Beeinträchtigung der Lagerfunktionalität eine Entwicklung zu unerwünschten Betriebszuständen erkennbar ist und weitergehende Analysen und Aussagen über den Zustand des Gleitlagers, insbesondere dessen Verschleißzustand, möglich sind.

Die Aufgabe wird hinsichtlich eines Verfahrens zur Zustandsüberwachung eines Gleitlagers gemäß dem Oberbegriff von Anspruch 1 in Verbindung mit dessen kennzeichnenden Merkmalen gelöst. Hinsichtlich eines dieses Verfahren ausführenden Systems wird auf Anspruch 9 verwiesen, welches gemäß Anspruch 15 vorzugsweise in Verbindung mit einer Windkraftanlage zum Einsatz kommt. Der Anspruch 16 gibt ein das Verfahren verkörperndes Computerprogrammprodukt an. Die jeweils rückbezogenen abhängigen Ansprüche geben vorteilhafte Weiterbildungen der Erfindung wieder.

Die Erfindung schließt die verfahrenstechnische Lehre ein, dass eine Steuereinheit zur Zustandsüberwachung aus mindestens einem physikalischen Gleitlagermodell N-V-F (N = Nominal bzw. Normalzustand, V = variabeles, der Realität nachführbares Modell, F = Fehlermodell), das als Eingangsgrößen u zumindest die Drehzahl (n) des rotierenden Bauteils, eine Lagerlast (F) und eine Temperatur (T) des Gleitlagers erhält und diesen Eingangsgrößen u ein dynamisches Verhalten des Gleitlagers oder Schmierspalts zuordnet, zumindest eine Zustandsgröße s; T; p des Gleitlagers und/oder des Schmieröls als Ausgangsgröße y nach Anspruch 1 bestimmt. Hierbei ist die zeitliche Ableitung x-Punkt, die zeitliche Veränderung der Zustandsgrößen und lediglich ein "mathematischer Trick" der Zustandsraummethode, eine interne Berechnungsgröße, die nach außen nicht weiter benutzt wird. Mit mindestens einem Sensor wird ein Vergleichswert für zumindest eine der besagten Zustandsgrößen s; T; p gemessen, vorzugsweise also die Spaltdicke des Schmierspalts des Gleitlagers, die Lagertemperatur und/oder der Schmieröldruck. Schließlich wird aus einem Vergleich des gemessenen Wertes der Zustandsgröße s; T; p mit dem modellbasiert als Ausgangsgrößen y berechneten Wert der Zustandsgröße s; T; p durch die Steuereinheit ausgewertet, inwieweit das physikalische Gleitlagermodell N-V-F das reale Verhalten des Gleitlages abbildet.

Das erfindungsgemäße Verfahren sieht insbesondere die parallele Berechnung unterschiedlicher im Gleitlagermodell N-V-F enthaltener Einzelmodelle vor. Dabei bildet ein ideales Modell N den Nominalfall im Sinne eines normalen Betriebs eines sich in Takt befindlichen Gleitlagers ab, welches eine Modellierung des konstruktiven Zustands des Gleitlagers darstellt. Dabei können auch Herstellungstoleranzen und -parameter der Gleitlagerbauteile mit einfließen. Ein variables Modell V dient vornehmlich dem Kalibrieren durch Abgleich mit einem gemessenen Sensorwert einer Zustandsgröße des Gleitlagers. Somit lässt sich das variable Modell V auf das reale Verhalten anpassen. Daneben kann mindestens ein Fehler-Modell F zur Abbildung hinsichtlich charakteristischer Fehlerzustände - beispielsweise eine veränderte Ölviskosität, Mangelschmierung, Weitung der Lagergeometrie durch Verschleiß und dergleichen - im Rahmen der Zustandsüberwachung genutzt werden.

Als Modelle sind im Rahmen dieser Anordnung physikalische Modelle eines einzelnen Gleitlagers oder des gesamten Systems zu verstehen. Dabei sind alle Modelle gleichartig modelliert, basieren also auf denselben Gleichungen. Dies können nicht-lineare Gleichungssysteme für das hydrodynamische Verhalten (beispielsweise eine Reynolds-Gleichung), Temperaturmodelle, linear-elastisches (FE), elastokinematisches und strukturdynamisches Verhalten sein, die entsprechend der Lagerung oder des gesamten Antriebsstrangs gekoppelt sind. Die Modelle können in dem zu überwachenden Betriebsbereich linearisiert und im Zustandsraum dargestellt sein, gemäß der nachfolgenden Formel:

$$\dot{x}(t) = A(\rho)x(t) + B(\rho)u(t)$$

$$y(t) = C(\rho)x(t) + D(\rho)u(t)$$

$$\rho = \left(\rho_1, \rho_2, \dots \rho_i\right)^T$$

wobei die Variablen bzw. Formelzeichen die folgende Bedeutung haben: **Mit x = Zustandsvektor, y = Ausgangsgrößen, u = Eingangsgrößen, A = Zustandsmatrix, B = Eingangsmatrix, C = Ausgangsmatrix, D** = **Durchgangsmatrix,** ρ **(rho) = variable Parameter, Betriebsparameter oder Störgrößen (deren Wert unbekannt ist, aber deren Einfluss bekannt ist)**

Weiterhin sei darauf hingewiesen, dass die Modelle, obwohl sie nicht Teil der beanspruchten Erfindung sind, auch als Eingrößensystem (SISO, single-input, single-output) oder Mehrgrößensystem (MIMO, multiple-input, multipleoutput) aufgebaut ein können. Als Eingangsgrößen u sind in der Regel leicht messbare Größen, wie Öltemperatur im Sumpf T, Drehzahl n, Drehmoment M, vorgesehen. Die Zustandsgrößen x sind Größen, die den Betriebszustand des Gleitlagers widerspiegeln, diese sind z.B. Schmierspalthöhe oder Lagerpositionen, Schmieröldruck, Ölvolumenstrom, Lagertemperatur oder die Temperatur des austretenden Öls ggf. weitere. Die Lagerposition(en) lässt sich aus Kontakt- oder Abstandssensoren zur Messung der Spaltdicke des Gleitlagers ermitteln. Ausgangsgrößen y können auch weitere, nicht gemessene Parameter des Gleitlagers oder des Systems sowie gemessene Zustandsgrößen sein und demgegenüber gegebenenfalls hinsichtlich Güte und Abtastzeit abweichen. Dies ist insbesondere für die Bestimmung der minimalen Spalthöhe (h_min) des Gleitlages und der Temperatur des austretenden Öls vorgesehen, die im Modell kontinuierlich berechnet wird, jedoch sensortechnisch in der Regel nur bereichsweise oder grob bestimmbar ist. Bekannte z.B. Außentemperatur, Windstärke, Anstellwinkel der Rotorblätter, etc. oder unbekannte Störgrößen ρ (rho) können zulässig- beispielsweise eine Last - sein oder unerwünscht sein - beispielsweise Verschleiß - und parametrieren das ideale Modell N als Basismodell für den Ausgangszustand oder eines der Fehler-Modelle F. In diesem Zusammenhang kann das variable Modell V anhand eines Beobachtermodells/Kalmanfilters dem realen Verhalten nachgeführt werden.

Gemäß eines wesentlichen Aspekts der Erfindung werden die Ausgangsgrößen y des physikalischen Gleitlagermodells N-V-F mit den real gemessenen Zustandsgrößen zwecks Abgleich/Kalibrierung verglichen, insbesondere der die minimale Spalthöhe des Lagerspalts s und damit die Schmierfilmhöhe, die Lagertemperatur T, der Schmieröldruck p oder weitere Messgrößen oder einem Vektor unterschiedlicher Ausgangsgrößen y.

Erfolgt in der Realität ein Anlaufen des Gleitlagers, so hebt das rotierende Bauteil, beispielsweise die Welle, zu einem bestimmten Zeitpunkt vom stehenden Bauteil, beispielsweise der Lagerschale, ab. Dieser Abhebezeitpunkt kann beispielsweise durch einen Kontaktsensor zwecks Abgleich auch sensortechnisch ermittelt werden. Zum Abhebezeitpunkt wird die Schmierfilmdicke als Höhe der maximalen Rauigkeitsspitzen beider miteinander korrespondierender Laufflächen des Gleitlagers angenommen. Dieser Wert wird mit dem Wert aus dem idealen Modell N verglichen; die Differenz wird als Residuum bezeichnet. Des Weiteren werden für den gleichen Wert die Residuen des mindestens einen Fehler-Modells F gerechnet. Sollen Werte, die nicht gemessen wurden, verglichen werden, werden die Werte des variablen Modells V, welche an das reale Verhalten des Gleitlagers nachgeführt wurden, zum Abgleich genutzt. Ein solcher nicht gemessener Wert kann beispielsweise die Schmierfilmdicke nach dem Abhebepunkt sein, falls im Gleitlager lediglich ein Kontaktsensor verbaut ist. Allgemein ist das Residuum für Messgrößensysteme mit folgender Formel beschreibbar:

$$\int_{t_0}^{t_0+T_\psi} \Theta_N(\xi)d\xi$$

wobei das Formelzeichen Θ ist eine mathematische Funktion, welche die Differenz von Ausgangs- und/oder Zustandsgrößen zwischen Modell und Realität (Index N: Nominales Modell ggü. Realität, F: Fehlermodell ggü. Realität) oder unterschiedlichen Modellen verarbeitet. Da die Differenzen zeitlich abhängig sind, ist auch O von der Zeit ξ abhängig. Entspricht O der Funktion "1", so entspricht O den Differenzen. Die Differenzen können im Falle mehrerer Größen (Vektor) als Betrag, einem Skalarprodukt oder einer mathematischen Funktion auf eine Größe reduziert werden. Auf die zeitabhängige Differenz kann (im Fall eines Vektors elementweise) eine beliebige Übertragungsfunktion (Filterfunktion) angewendet werden. Die Integration von einem beliebigem Startzeitpunkt t_0 bis zu einem Zeitpunkt t_0+T_ψ über die zeitlich abhängige Funktion der Differenz Θ(ξ) entspricht (je nach Funktion Θ) einem funktionalem Effektiv- oder Mittelwert über das Zeitintervall T_ψ über welches das Residuum gebildet werden soll.

Im Falle des Abhebezeitpunkts ergeben sich aufgrund der diskreten Betrachtung die folgenden Quotienten für das Residuum des idealen Modells N in Bezug auf das Residuum des variablen Modells V:

$$\Psi_i = \frac{\overbrace{\int_{t_0}^{t_0+T_\psi} \Theta_N(\xi)d\xi}^{\text{Residuum aus Filter für Nominalfall}}}{\underbrace{\int_{t_0}^{t_0+T_\psi} \Theta_V(\xi)d\xi + \in}_{\substack{\text{Residuum aus Filter für variables,}\\ \text{der Realität nachgeführtem Modell}}}}$$

Für das Residuum des idealen Modells N in Bezug auf das Residuum des Fehler-Modells F ergibt sich folgende Beziehung:

$$\Psi_i = \frac{\overbrace{\int_{t_0}^{t_0+T_\psi} \Theta_N(\xi)d\xi}^{\text{Residuum aus Filter für Nominalfall}}}{\underbrace{\int_{t_0}^{t_0+T_\psi} \Theta_F(\xi)d\xi + \in}_{\text{Residuum aus Filter für Fehlerfall}}}$$

wobei die noch nicht vorstehend erörterten Formelzeichen der beiden vorgenannten Formeln wie folgt bezeichnet sind $\Psi$ bezeichnet das Verhältnis der Residuen und kann als Prüfkriterium bezeichnet werden, der Index i bezeichnet welche Residuen ins Verhältnis gesetzt wurden (z.B. Nominal- vs. Fehlerfall), d.h. welches Kriterium geprüft wurde. Das e im Nenner ist ein infinitesimal kleiner Wert, um die Division durch Null abzufangen.

Der vorstehende Quotient aus dem Residuum des idealen Modells N und dem Residuum des variablen Modells V dient als allgemeiner Fehlerindikator für Fehler, welche nicht modelliert sind, wie auch zur Überwachung des Algorithmus. Da alle Modelle N, V, F gleichartig aufgebaut sind, heben sich durch den Quotient der vorstehenden Formeln gleichartige Abweichungen auf. Das variable Modell V des Modells ggü dem realen Verhalten des Systems weist aufgrund der Nachführung z.B. mit einem Kalmanfilter eine verhältnismäßig geringe Abweichung auf. Im Idealfall, also bei intaktem Gleitlager, trifft dies auch für das ideale Modell N zu. Der Quotient zwischen idealem Modell N und variablem Modell V pendelt um 1, da im Zähler und Nenner Werte ähnlicher Dimension stehen. Schwankt das Residuum zu stark, wird der Vergleich fortgesetzt, wenn die Werte stabil sind. Instabile Zeitintervalle werden verworfen. Ist der Wert für längere Zeit nicht stabil und befindet sich der besagte Quotient außerhalb von vordefinierten Grenzwerten, wird eine Fehlermeldung im Fehlerspeicher hinterlegt, optional eine diesbezügliche Störungsmeldung ausgegeben, welche anzeigt, dass keine klare Zustandsdiagnose möglich ist.

Der Quotient aus dem idealen Modell N und dem Fehler-Modell F dient dagegen der Zuordnung einer Abweichung zu einem Fehlermodus. Ist der Quotient kleiner als 1 oder unterhalb eines festgelegten Grenzwerts, beispielsweise 1,1 bis 1,5, so liegt kein Fehler vor. Hierdurch lässt sich die Detektionsempfindlichkeit für einen Fehler einstellen.

Gemäß einer weiteren die erfindungsgemäße Lösung verbessernden Maßnahme wird vorgeschlagen, dass zusätzlich auch ein Verschleißmodell VS angewendet wird, dessen Ausgangswerte $y_v$ ein Maß für den Verschleißzustand des Gleitlagers darstellen, wobei das Betriebsverhalten der das Gleitlager umfassenden Maschine oder Anlage durch die Steuereinheit nach Maßgabe des Verschleißzustands angepasst werden kann. Eine derartige Anpassung kann beispielsweise in Abhängigkeit mindestens eines oberen und/oder unteren vordefinierten Grenzwerts erfolgen. Bei Erreichen oder Überschreiten eines solchen Grenzwerts kann beispielsweise eine Lastrücknahme, Anpassung des Öldrucks der Schmierölzufuhr oder dergleichen durchgeführt werden. Neben einem oberen und/oder unteren Grenzwert können auch mehrere kaskadierte Grenzwerte oder Zwischenschwellwerte für einen Temperaturbereich, Druckbereich oder dergleichen eine solche oder ähnliche Anpassung des Betriebsverhaltens auslösen. Das vorgenannte Verschleißmodell VS kann beispielsweise Auskunft über die Entwicklung der Oberflächenrauheit der Lageroberflächen geben. Verschleißmodelle VS sind vorzugsweise in dem vorstehend erörterten Gleitlagermodell N-V-F integriert oder unabhängig hiervon ausgeführt.

Gemäß einer weiteren die Erfindung verbessernden Maßnahme wird vorgeschlagen, dass das Betriebsverhalten der Maschine oder Anlage durch die Steuereinheit dann angepasst wird, wenn das mindestens eine Verschleißmodell VS einen zu hohen Verschleiß ausweist, oder nach den beiden vorstehenden Formeln gebildeten Quotienten eine Abweichung aufweist. In Anpassung auf einen hohen Verschleißzustand des Gleitlagers, der vorzugsweise über charakteristische vordefinierte Grenzwerte oder Schwellenwerte ermittelt wird, kann die hierauf einwirkende Lagerlast F verringert und/oder die Drehzahl n erhöht werden, um ein Einglätten von Lagerlaufflächen zu erzielen. Des Weiteren werden Anlauf-, Abschaltbetrieb und weitere wiederkehrende Betriebszustände so angepasst, dass die Modelle eine geringfügige Schädigung ausweisen.

Insbesondere die Steuerung einer Windkraftanlage reagiert nur auf wenige kritische Parameter, beispielsweise auf die Lagertemperatur an der schnell drehenden Welle. Bei einer Umstellung auf Gleitlagerung können jedoch auch andere Lager - beispielsweise durch Mangelschmierung - an die zulässige Temperaturobergrenze kommen.

Deshalb wird vorgeschlagen, vorzugsweise in die Steuereinheit, welche für eine Onlineüberwachung der Maschine oder Anlage zuständig ist, derartige vorzugsweise durch Überwachung charakteristischer vordefinierter Grenzwerte oder Schwellenwerte erkennbare kritische Betriebszustände in einen Parameter, wie beispielsweise der Lagertemperatur, umzurechnen, auf welche die Steuerung der Maschine oder Anlage bereits durch Notabschaltung reagiert. Hierdurch können in vorteilhafter Weise auch andere physikalische Größen oder dimensionslose Fehlerindikatoren genutzt werden, um einen Wert für die Lagertemperatur zu berechnen, der die gewünschte Reaktion der Maschine oder Anlage hervorruft, beispielsweise eben eine Notabschaltung.

Gemäß einer weiteren die Erfindung verbessernden Maßnahme wird vorgeschlagen, dass zusätzlich zumindest die Eingangsgrößen x, Drehzahl n und Drehmoment M durch eine Messung im Leistungsfluss vor oder nach dem Gleitlager oder über das Lager hinweg (Messstellen zur Bestimmung des Drehmoments befinden sich vor und hinter der Lagerung) mittels einer an sich bekannten sogenannten Dynamischen Lastmessung(DLM), die auch als Dynamic Load Monitoring bezeichnet wird, ermittelt werden. Denn insbesondere für ein Getriebe, das mit mindestens einem Gleitlager ausgerüstet ist, sind in der Anlagensteuerung diese Größen normalerweise bekannt. Die Messung kann dabei vor, nach oder in einem Getriebe, vorzugsweise durch DLM oder weitere bekannte Prinzipien des Standes der Technik, erfolgen. Bei einer DLM wird über eine Differenzmessung von Lastmomenten am Getriebeeingang und -ausgang während des Betriebes eine Lasterfassung durchgeführt.

Gemäß die Erfindung wird vorgeschlagen, anhand der ermittelten Temperatur T des Gleitlagers, der Drehzahl n des rotierenden Bauteils und der Lagerlast F per Orbitanalyse die Spaltdicke s des Gleitlagers, und zwar die minimale Spaltdicke $s_{min}$, zu berechnen.

Bei einer Orbitanalyse wird die räumliche Orientierung des drehenden Bauteils, beispielsweise einer Welle, relativ zum feststehenden Bauteil, beispielsweise einer Lagerschale, des Gleitlagers bestimmt. Dies kann in bekannter Weise per empirischer Formel, EHD, Reynolds DGL und dergleichen erfolgen. Ab einer minimalen Spaltdicke $s_{min}$, welche größer als die Rauheitsspitzen der miteinander korrespondierenden Laufflächen ist, kann von einer Trennung derselben ausgegangen werden. Dieser Abhebezeitpunkt wird zusätzlich messtechnisch per Kontaktsensor ermittelt. Wird als Kontaktsensor der Ohmsche oder kapazitive Widerstand zwischen Lagerschale und Welle genutzt, ändert sich dieser signifikant, sobald keine Kontaktpunkte mehr vorhanden sind. Hierdurch kann für die minimale Spaltdicke $s_{min}$ ein Abgleich des Ergebnisses der Orbitanalyse mit der Realität durchgeführt werden. Die minimale Spaltdicke $s_{min}$ des Gleitlagers entspricht der minimalen Schmierfilmdicke, welche während des Betriebs des Gleitlagers aufrechtzuerhalten ist. Wird die minimale Schmierfilmdicke unterschritten, so ist mit einem fortschreitenden Lagerverschleiß durch Materialabtrag zu rechnen.

Ein System zur Zustandsüberwachung eines mit Schmieröl betriebenen Gleitlagers, welches das vorstehend erörterte Verfahren ausführt, umfasst also mindestens einen Sensor zum Messen einer geeigneten Zustandsgröße s; T; p oder dergleichen des Gleitlagers sowie eine elektronische Steuereinheit zur modellbasierten Zustandsüberwachung des Gleitlagers, enthaltend ein physikalisches Gleitlagermodell N-V-F, in welchem eine parallele Berechnung der hierin enthaltenden unterschiedlichen Modelle erfolgt.

Gemäß einer temperaturbasierten Ausführungsform wird vorgeschlagen, dass das Gleitlagermodell N-V-F aus zusätzlichen Eingangsgrößen u: n, M, T_Sumpf, Zustandsgröße x: minimale Schmierspalthöhe h_min (bzw. s_min) und mindestens die Ausgangsgröße y: Ölaustrittstemperatur $T_A$* am Gleitlagerberechnet und heranzieht, um diese mit einer sensortechnisch gemessenen Öltaustrittstemperatur $T_A$ zum Plausibilisieren des Gleitlagermodells N-V-F abzugleichen. Die Größen u, x, y sind Modellgrößen. Zum Abgleich mit Messwerten dienen die Ausgangsgrößen y, wobei dieser Vektor auch Zustandsgrößen x beinhalten kann. Diese temperaturbasierte Ausführungsform gründet auf dem Gedanken, dass für jedes Gleitlager zumindest ein Temperatursignal, beispielsweise des ausströmenden Schmieröls seitlich des Schmierspalts nahe der Lastzone oder unterhalb der Gleitlageroberfläche in der Lastzone der Lageroberfläche in der Lastzone, sowieso verfügbar ist, welches sich signifikant von der Ölsumpftemperatur $T_S$ unterscheidet. Dieses Temperatursignal kann zum Plausibilisieren und als Zustandsrückführung im Sinne einer Regelung für das temperaturbasierter Gleitlagermodell N-V-F benutzt werden. Insbesondere für das variable Modell ist damit eine Nachführung an die Realität vorgesehen. Aus den Betriebsbedingungen n, M und der Ölsumpftemperatur $T_S$, welche der Öleintrittstemperatur in das Gleitlager entspricht, werden die Zustandsgrößen für das Gleitlager bestimmt, beispielsweise dessen Lagerspalt s, Lagerexzentrizität, wirkende Lagerlasten, Reibungskoeffizient, Verlustleistung sowie auch die Öltaustrittstemperatur $T_A$*.

Bei einer alternativen lagerspaltbasierenden Ausführungsform ist vorgesehen, dass das Gleitlagermodell N-V-F aus mindestens die Drehzahl (n) des rotierenden Bauteils, eine Lagerlast (F) und eine Temperatur (T) des Gleitlagers als Eingangsgrößen u zumindest eine Zustandsgröße, mindestens umfassend den Lagerspalt s im Gleitlager, als Ausgangsgröße y berechnet und heranzieht, um diese mit einem sensortechnisch gemessenen Lagerspalt s zum Plausibilisieren des Gleitlagermodells N-V-F abzugleichen, wie bereits vorstehend erörtert wurde Dies kann auch als Zustandsrückführung im Sinne einer Regelung für das lagerspaltbasierte Gleitlagermodell N-V-F benutzt werden. Insbesondere für das variable Modell ist damit eine Nachführung an die Realität vorgesehen.

Zusätzlich kann bei der Kombination der lagerspaltbasierten und temperaturbasitern Ausführungsform die Lagerbelastung (das wirkende Drehmoment) zurückgerechnet werden (Umkehrrechnung aus dem Gleitlagermodell) und mit dem gemessenen Drehmoment / wirkenden Lagerlast verglichen werden. Die Differenz kann als Indikator für die Funktion der Überwachung (im Sinne einer Selbstdiagnose) und die Differenz als Regelrückführung (zum Anpassen der Modelle an die Realität) genutzt werden.

Aus der modellbasierten Zustandsüberwachung des Gleitlagers lassen sich Zustandsmerkmale, wie Verschleiß, Mangelschmierung, Schmierölschädigung und dergleichen, sowie Empfehlungen zur Verbesserung der Betriebsführung oder Regelung der Maschine oder Anlage in Form einer Anlaufphase, Notabschaltung und dergleichen, ableiten. Vorzugsweise werden dem Verschleißmodell VS im Zuge des Abgleichens Kenngrößen zum Tribologischen Regime des Gleitlagers zugeführt, wobei das Verschleißmodell VS mindestens eine der folgenden Funktion beinhaltet:

- Verschleißkennfeld: Für jeden Betriebszustand, beispielsweise Gleitgeschwindigkeit und Lagerspalt, ist die zugehörige Verschleißrate als Kenngröße des Materialabtrags pro Zeit hinterlegt, welche aus Versuchen gewonnen wurde.
- Physikalische Verschleißmodelle: Aus dem allgemeinen Stand der Technik werden physikalische Verschleißmodelle nach Archard oder Fleischer berücksichtigt, inklusive der erforderlichen Modelle zur Beschreibung der Oberflächenstruktur sowie Berücksichtigung derselben im Gleitlagermodell N-V-F.
- Probabilistische Verschleißmodelle: Diese stellen anhand von Versuchen trainierte neuronale Netze dar.

Unter einem Tribologischen Regime des Gleitlagers sind die typischen Betriebszustände, in denen sich ein Gleitlager befinden kann (analog der x-Achse der Stribeck-Kurve) und die "Hauptursachen" (Betriebsparameter), zu verstehen . Die Zustände sind Grenzreibung oder Festkörperreibung, Mischreibung und hydrodynamische Reibung. Die jeweiligen Bereiche können beliebig fein, weiter unterteilt werden, z.B. Mischreibung mit 100, 90, ...10% Festkörperkontaktpressung (asperty contact). Nun kann das Lager durch verschiedene Umstände in den gleichen Betriebszustand kommen, so ist z.B. Mischreibung mit 50% asperity contact bei hoher Last, niedriger Geschwindigkeit und geringer Öltemperatur möglich und genauso bei mittlerer Last, mittlerer Geschwindigkeit und hoher Öltemperatur. Der Betriebszustand (x-Achse) und die Betriebsparameter bilden eine mehrdimensionale Matrix, jedes Feld der Matrix spiegelt ein tribologisches Regime (Zustand + Ursache) wider. In dieser Matrix werden nun Aufenthaltszeiten oder Umdrehungen klassiert. Das Verschleißkennfeld orientiert sich ebenfalls am Aufbau dieser Klassiermatrix, d.h. für jedes Regime wurde die Verschleißrate berechnet oder im Versuch ermittelt. Auf diese Weise können unterschiedliche Verschleißvorgänge online oder offline (z.B. beim Auslesen des Statistikspeichers oder eine Diagnosefunktion) akkumuliert werden.

Die aus dem Verschleißmodell VS ermittelte Verschleißrate wird gemäß einer weiteren die Erfindung verbessernden Maßnahme in einer Akkumulationseinheit Akk akkumuliert, wobei zumindest eine der nachfolgenden Funktionen berücksichtigt wird:

- Kontinuierliche oder diskrete Akkumulation des ortsabhängigen Verschleißes des Gleitlagers, wobei aus dem Gleitlagermodell bereits der Lastvektor bekannt ist, beispielsweise pro Winkelsegment.
- Mitführen eines aktuellen Geometriemodells des Gleitlagers aus dem ermittelten Verschleiß, welches zur Berechnung der Kenngrößen des Gleitlagers im Gleitlagermodell N-V-F berücksichtigt wird.

Gemäß einer anderen die Erfindung verbessernden Maßnahme wird vorgeschlagen, dass eine Ausgabeeinheit AE zum Interpretieren der Ergebnisse aus dem Gleitlagermodell N-V-F, der Akkumulationseinheit Akk und/oder des Verschleißmodells VS vorgesehen ist. Im Rahmen der Zustandsüberwachung führt die Ausgabeeinheit AE mindestens eine der nachfolgenden Funktionen aus:

- Warnung, falls der Verschleiß in einem Lagerbereich, beispielsweise einem Winkelsegment, zuvor festgesetzte Grenzwerte überschreitet.

- Ableiten von Handlungsempfehlungen für die Betriebssteuerung der Maschine oder Anlage, beispielsweise in Form einer Anzeige von Stellbefehlen oder ein Eingriff in den Betrieb durch Leistungsreduktion, Verschiebung des Betriebspunkts und dergleichen.

- Diagnosefunktion für das System, beispielsweise für den Grad der Zuverlässigkeit des Abgleichs.

- Bereitstellen von Statistikinformationen zum Betriebsverhalten der Maschine oder Anlage.

- Erstellen einer Historie des Verschleißfortschritts über die Zeit mit Trendanalyse und Prognose eines Wartungsbedarfs, denn die Abfolge der Betriebszustände hat einen Einfluss auf die Oberflächenstruktur. So kann ein Nennbetrieb zur Einglättung der Oberfläche führen, während Grenzreibung zur Erhöhung der Rauigkeit führen kann. Damit kann gezeigt werden, welches Betriebsverhalten in Zukunft eine Verbesserung oder weitere Verschlechterung bewirkt. Falls sich die Oberflächenstruktur bereits grenzwertig verschlechtert hat, können nur noch ververbessernde Betriebszustände - beispielsweise Leistungsreduktion - zugelassen werden. Denn es ist zuerst ein Einglätten der Oberflächen notwendig, bevor Betriebszustände zugelassen werden, die eine weitere Verschlechterung bewirken.

Das Gleitlagermodell N-V-F, das Verschleißmodell VS sowie die Abgleich-, Akkumulations- und Ausgabefunktion ist vorzugsweise initial für jedes Gleitlager vorparametriert, kann aber jederzeit durch ein Update des diese Funktionen vorzugsweise verkörpernden Computerprogrammprodukts geändert oder erweitert werden. Die Änderung kann in Form einer Modellidentifikation, Selbstkalibrierung, Training neuronaler Netze, etc. auch selbständig erfolgen. Statt einer kontinuierlichen oder diskreten Verarbeitung der Signale kann insbesondere eine Klassierung der Daten und eine Art Stapelverarbeitung für größere Zeiträume vorgesehen werden.

Weitere die Erfindung verbessernden Maßnahmen werden nachstehend gemeinsam mit der Beschreibung eines bevorzugten Ausführungsbeispiels der Erfindung anhand der Figuren näher dargestellt. Es zeigt:

Fig. 1    eine schematische Blockschaltbilddarstellung eines Systems zur modellbasierten Zustandsüberwachung eines in einem Getriebe enthaltenden Gleitlagers, und

Fig. 2    einen prinzipiellen Ablaufplan des vom Gleitlagermodell des Systems nach Fig. 1 durchgeführten Verfahrens.

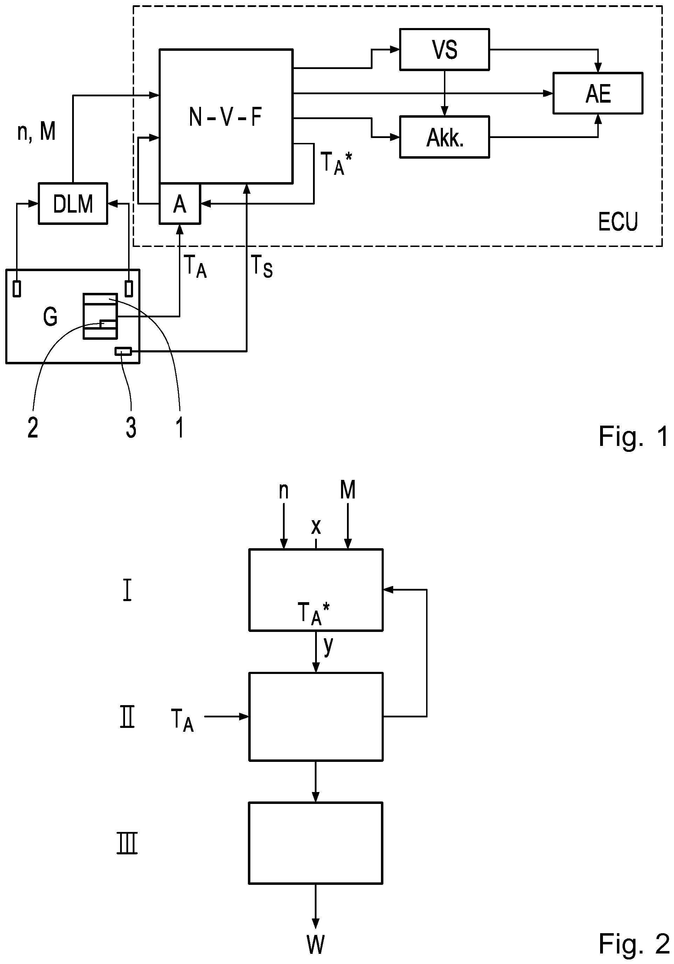

Gemäß Fig. 1 umfasst ein System, das nicht Teil der beanspruchten Erfindung ist, zur Zustandsüberwachung eines mit Schmieröl betriebenen Gleitlagers 1 einen Sensor 2 zur Messung der Temperatur $T_A$ an der Ölaustrittsstelle des Gleitlagers 1. Das Gleitlager 1 ist bei diesem Ausführungsbeispiel ein exemplarisches Planetenradlager einer Planetenstufe eines Getriebes G für eine Windkraftanlage. Das vom Sensor 2 gemessene Temperatursignal wird einer elektronischen Steuereinheit ECU zugeführt, welche hier mit einer Strichlinie eingefasst ist und zumindest die folgenden Funktionseinheiten beinhaltet: Gleitlagermodell N-V-F, Verschleißmodell VS, Akkumulationseinheit Akk und Ausgabeeinheit AE. Dabei können die Funktionseinheiten der ECU räumlich benachbart oder verteilt angeordnet sein. Ferner können die Funktionseinheiten auch aus mehreren Bestandteilen zusammengesetzt sein. Die gemessene Ölaustrittstemperatur $T_A$ am Gleitlager 1 dient innerhalb der ECU einem Abgleich A für eine zugeordnete Zustandsgröße - hier der berechneten Ölaustrittstemperatur $T_A^*$ - aus einer nachfolgend erläuterten modellbasierten Zustandsüberwachung des Gleitlagers 1.

Bei der modellbasierten Zustandsüberwachung des Gleitlagers 1 ist die Steuereinheit ECU mit einem physikalischen Gleitlagermodell N-V-F ausgestattet, welches zugeführten Eingangsgrößen ein dynamisches Verhalten des Schmieröls im Gleitlager 1 zuordnet und daraus eine überwachungscharakteristische Zustandsgröße des Gleitlagers 1 bestimmt.

Im Rahmen des Gleitlagermodells N-V-F kommt ein ideales Modell N für den Nominalfall eines Normalbetriebs des Gleitlagers 1, ein variables Modell V, welches auf das reale Betriebsverhalten des Gleitlagers 1 anpassbar ist, sowie ein Fehler-Modell F zur Abbildung hinsichtlich charakteristischer Fehlerzustände des Gleitlagers 1 zum Einsatz, welche miteinander in Bezug gesetzt das Gleitlager 1 hinsichtlich des Betriebsverhaltens oder von Fehlerzuständen analysieren lassen.

Dem Gleitlagermodell N-V-F der ECU werden als Eingangsgrößen die Drehzahl n sowie das Drehmoment M zugeführt, welche mittels Dynamic Load Monitoring DLM am Getriebe G durch Messung des Leistungsflusses sensortechnisch ermittelt worden sind. Das physikalische Gleitlagermodell N-V-F berechnet anhand der ermittelten Ölaustrittstemperatur $T_A$ am Gleitlager 1, der Drehzahl n des rotierenden Bauteils und der aus dem Drehmoment M resultierenden Lagerlast F per Orbitanalyse auch die minimale Spaltdicke des Gleitlagers 1, welche einen Indikator für den Verschleißzustand darstellt. Denn geht die Spaltdicke gegen Null, so ist mit einem verschleißverursachenden Kontakt zwischen Welle und Lagerschale des Gleitlagers 1 zu rechnen. Erreicht die minimale Spaltdicke im Nenndrehzahlbereich des rotierenden Bauteils einen Normalwert oder - wertebereich, so ist von einem quasi verschleißfreien Betrieb des Gleitlagers 1 auszugehen.

Je nach Analyseergebnis kann durch die Steuereinheit ECU auf das Betriebsverhalten der Anlage Einfluss genommen werden, beispielsweise nach Erkennen eines örtlichen Verschleißes an den Lagerlaufflächen die Lagerlast F verringert werden und die Drehzahl n erhöht werden, um ein vorübergehendes Einglätten der betroffenen Lagerlaufflächen zu erzielen.

In einem dem Gleitlagermodell N-V-F zugeordnetes Verschleißmodell VS wird die Verschleißrate als Kenngröße eines verschleißverursachenden Materialabtrags an Welle und/oder Lagerschale pro Zeiteinheit ermittelt, welche einer Akkumulationseinheit Akk zum Akkumulieren des Verschleißes in Abhängigkeit der Örtlichkeit zugeführt wird. Die Ergebnisse werden in einer nachfolgenden Ausgabeeinheit AE interpretiert und der Betriebssteuerung der elektronischen Steuereinheit ECU zugeführt.

Gemäß Figur 2 (nicht Teil der beanspruchten Erfindung), wird also zur Einflussnahme auf die Betriebssteuerung in einem ersten Verfahrensschritt I aus der Drehzahl n sowie dem Drehmoment M des drehenden Bauteils am - hier nicht weiter dargestellten - Gleitlager als Eingangsgrößen x durch die vorstehend erörterte modellbasierte Analyse eine Zustandsgröße, hier die Ölaustrittstemperatur $T_A^*$, am Gleitlager als Ausgangsgröße y berechnet.

In einem nachfolgenden Verfahrensschritt II wird die berechnete Ölaustrittstemperatur $T_A^*$ dafür herangezogen, um diese mit einer sensortechnisch gemessenen Ölaustrittstemperatur $T_A$ zu vergleichen. Der Vergleich erfolgt einerseits zwecks einer Plausibilisierung des im vorausgegangenen Verfahrensschritts I verwendeten Gleitlagermodells und andererseits auch in einem nachfolgenden Verfahrensschritt III zwecks Zustandsüberwachung der Maschine oder Anlage. Dies erfolgt, indem die Ergebnisse aus dem Gleitlagermodell N-V-F zwecks Zustandsüberwachung interpretiert, klassiert, verglichen und plausibilisiert oder mit einem Verschleißmodell kombiniert, klassiert und akkumuliert werden. Schließlich kann beispielsweise ein optisches oder akustisches Warnsignal W an den Bediener der Maschine/Anlage ausgegeben werden, falls der Verschleiß in einem Lagerbereich des Gleitlagers zuvor festgesetzte Grenzwerte überschreitet. Ebenso ist eine Rückspeisung eines solchen Warnsignals W an die ECU oder dergleichen zur Einleitung von korrigierenden Steuermaßnahmen denkbar.

Die Erfindung ist nicht beschränkt auf das vorstehend beschriebene bevorzugte Ausführungsbeispiel. Es sind vielmehr auch Abwandlungen hierfür denkbar, welche vom Schutzbereich der nachfolgenden Ansprüche mit abgedeckt sind. So ist es beispielsweise auch möglich, anstelle des Temperaturverhaltens das hydrodynamische Verhalten (Strömungsverhalten) des Gleitlagers über eine modellbasierte Zustandsüberwachung der Spaltdicke des Gleitlagers der Zustandsüberwachung zugrunde zu legen. Auch Kombinationen verschiedener Zustandsgrößen - beispielsweise auch unter Einbeziehung des Schmieröldrucks - sind denkbar. Ebenfalls ist es möglich, beispielsweise auch Maßnahmen zur Betriebssteuerung der Maschine oder Anlage im Ergebnis der Zustandsüberwachung des Gleitlagers durchzuführen, wie eine Lastanpassung der Belastung der Bauteile, eine Erhöhung der Schmiermittelzufuhr bei Mangelschmierung, eine Notabschaltung der Maschine oder Anlage bei Erreichen einer Verschleißgrenze oder dergleichen. Die vorgenannte Lastanpassung kann beispielsweise in einer Reduzierung der Last bei Detektion eines Überlastbetriebes oder auch in einer Erhöhung der Last zur Erhöhung der Leistungsausbeute der Maschine oder Anlage liegen.

Ferner ist die erfindungsgemäße Lösung nicht darauf beschränkt, dass das Verfahren zur Zustandsüberwachung lokal in der Maschine oder Anlage durchgeführt wird. Dieses kann beispielsweise auch auf einer Client-Server-Architektur durchgeführt werden, worin die sensorische Messwertermittlung clientseitig und die modellbasierte Zustandsüberwachung serverseitig erfolgt. Auch die Nutzung einer Cloud-Plattform zu diesem Zweck ist denkbar. Dies bietet den Vorteil, dass die ermittelten Zustandsüberwachungsinformationen auch für andere Einsatzzwecke als die Betriebssteuerung der Maschine oder Anlage nutzbar gemacht werden können. Unter einer Cloud-Plattform ist eine vernetzte informationstechnische Struktur zu verstehen, bei der mindestens ein Server mit mindestens eine Datenbank in Verbindung steht, die gleichzeitig auch von anderen Servern über nutzerindividuelle Kommunikationsschnittstellen zwecks Datenaustausch nutzbar ist. Über mit dem mindestens einen Server verbindbare Clients kann der Datenaustausch mit vielfältigen Nutzern stattfinden.

Bezugzeichen

1    Gleitlager
2    Sensor für Ölaustrittstemperatur $T_A$
3    Sensor für Ölsumpftemperatur $T_S$

n    Drehzahl
M    Drehmoment
s    Lagerspalt
F    Lagerlast

$T_A$    Ölaustrittstemperatur
$T_S$    Ölsumpftemperatur
$T_A^*$    Ölaustrittstemperatur (berechnet)

N-V-F    physikalisches Gleitlagermodell
N    ideales Modell
V    variables Modell
F    Fehler-Modell
VS    Verschleißmodell

ECU    elektronische Steuereinheit
DLM    Dynamic Load Monitoring
Akk    Akkumulationseinheit
AE    Ausgabeeinheit

x    Eingangsgrößen
y    Ausgangsgrößen
W    Warnsignal

**Patentansprüche**

1. Verfahren zur Zustandsüberwachung eines mit Schmieröl betriebenen Gleitlagers (1) für ein rotierendes Bauteil, bei welchem mit mindestens einem Sensor (2) eine lagercharakteristische physikalische Größe gemessen wird, welche einer Steuereinheit (ECU) zur Zustandsüberwachung zugeführt wird, **gekennzeichnet durch** die folgenden Schritte:

   - **durch** die Steuereinheit (ECU) wird aus mindestens einem physikalischen Gleitlagermodell (N-V-F), dem als Eingangsgrößen (u: n, M, T_Sumpf;) zumindest die Drehzahl (n) sowie das Drehmoment (M) zugeführt werden, zumindest eine Zustandsgröße (s; T; p) des Gleitlagers (1) und/oder des Schmieröls als Ausgangsgröße (y) bestimmt;
   - mit mindestens einem Sensor (2) werden Messwerte ermittelt und und Ausgangsgrößen y mit Messwerten abgeglichen, wobei der Ausgangsvektor Zustandsgrö-ßen (s; T; p) enthält..;
   - aus einem Vergleich des gemessenen Wertes der Zustandsgröße (s; T; p) mit dem modellbasiert als Ausgangsgrößen (y) berechneten Wert der Zustandsgröße (s; T; p)

   sind nicht messbare oder nicht gemessene Zustandsgrößen des Gleitlagers für die Zustands- und Funktionsüberwachung sowie Dokumentation (Klassierung und Speicherung) und anschließenden Interpretation verfügbar.

2. Verfahren nach Anspruch 1, **dadurch gekennzeichnet, dass** durch das Gleitlagermodell (N-V-F) ein ideales Modell (N) für den Nominalfall mit einem gleichartig aufgebauten variablen Modell (V) in Bezug gesetzt wird, welches auf das reale Betriebsverhalten des Gleitlagers (1) angepasst wird.

3. Verfahren nach Anspruch 1 oder 2, **dadurch gekennzeichnet, dass** durch das Gleitlagermodell (N-V-F) ein ideales Modell (N) für den Nominalfall mit einem gleichartig aufgebauten Fehler-Modell (F) zur Abbildung hinsichtlich charakteristischer Fehlerzustände in Bezug gesetzt wird, wobei die Fehlerzustände ausgewählt sind aus einer Gruppe, umfassend Mangelschmierung, veränderte Ölviskosität, verschleißbedingte Geometrieänderung am Gleitlager (1).

4. Verfahren nach Anspruch 2 und/oder 3, **dadurch gekennzeichnet, dass** das ideale Modells (N) für den Nominalfall mit dem variablen Modells (V) und/oder dem Fehler-Modell (F) in Bezug gesetzt wird, um die Residuen als Differenz zweier miteinander verglichener Modelle (N/V; N/F) zu bestimmen.

5. Verfahren nach Anspruch 4, **dadurch gekennzeichnet, dass** ein Verschleißmodell (VS) angewendet wird, dessen Ausgangswerte ein Maß für den Verschleißzustand des Gleitlagers (1) darstellen, wobei das Betriebsverhalten der das Gleitlager (1) umfassenden Maschine oder Anlage durch die Steuereinheit (ECU) nach Maßgabe des Verschleißzustands angepasst wird.

6. Verfahren nach Anspruch 5, **dadurch gekennzeichnet, dass** eine Anpassung des Betriebsverhaltens der Maschine oder Anlage durch die Steuereinheit (ECU) dadurch erfolgt,

   - dass ab Erreichen eines den Verschleißzustand des Gleitlagers (1) kennzeichnenden vordefinierten Grenzwerts oder Schwellenwertsdie hierauf einwirkende Lagerlast (F) verringert wird und/oder die Drehzahl (n) erhöht wird, um ein Einglätten von Lagerlaufflächen zu erzielen, und/oder
   - dass ab Erreichen eines Grenzwerts oder Schwellenwerts für eine einen kritischen Betriebszustand kennzeichnende physikalische Größe oder dimensionsloser Indikator in einen vordefinierten Steuerungsparameter, insbesondere die maximal zulässige Temperatur des Gleitlagers (1), umgewandelt wird, worauf die Steuereinheit (ECU) das Betriebsverhalten anpasst.

7. Verfahren nach Anspruch 1, **dadurch gekennzeichnet, dass** die Drehzahl (n) und/oder das Drehmoment (M) als Eingangsgrößen (u) durch eine Messung im Leistungsfluss vor oder nach dem Gleitlager (1) mittels Dynamischer Lastmessung (DLM) ermittelt werden.

8. Verfahren nach Anspruch 1, **dadurch gekennzeichnet, dass** anhand der ermittelten Temperatur ($T_A$; $T_S$) des Gleitlagers (1), der Drehzahl (n) des rotierenden Bauteils und der Lagerlast (F) per Orbitanalyse die minimale Spaltdicke ($s_{min}$) des Gleitlagers (1) berechnet wird.

9. System zur Zustandsüberwachung eines mit Schmieröl betriebenen Gleitlagers (1), bei welchem mit mindestens einem Sensor (2) eine lagercharakteristische physikalische Größe gemessen wird, welche einer Steuereinheit (ECU) zur Zustandsüberwachung zugeführt wird, wobei die folgenden Schritte durchgeführt werden:

   - durch die Steuereinheit (ECU) wird aus mindestens einem physikalischen Gleitlagermodell (N-V-F), dem als Eingangsgrößen (u) zumindest die Drehzahl (n) sowie das Drehmoment (M) zugeführt werden und diesen Eingangsgrößen (u) ein dynamisches Verhalten des Schmieröls zuordnet, zumindest eine Zustandsgröße (s; T; p) des Gleitlagers (1) und/oder des Schmieröls als Ausgangsgröße (y) bestimmt;
   - mit mindestens einem Sensor (2) wird ein Vergleichswert für zumindest eine der Zustandsgrößen (s; T; p) gemessen;
   - aus einem Vergleich des gemessenen Wertes der Zustandsgröße (s; T; p) mit dem modellbasiert als Ausgangsgrößen (y) berechneten Wert der Zustandsgröße (s; T; p) wird ausgewertet, inwieweit das physikalische Gleitlagermodell (N-V-F) das reale Verhalten des Gleitlagers (1) abbildetumfassend mindestens einen Sensor (2) zum Messen einer Zustandsgrößen (s; T; p) des Gleitlagers (1) sowie eine elektronische Steuereinheit (ECU) zur modellbasierten Zustandsüberwachung des Gleitlagers (1), enthaltend ein physikalisches Gleitlagermodell (N-V-F).

10. System nach Anspruch 9, **dadurch gekennzeichnet, dass** zum Plausibilisieren das Gleitlagermodell (N-V-F) aus zumindest dem Drehmoment (M), der Drehzahl (n) als Eingangsgrößen (x) zumindest eine Zustandsgröße, mindestens umfassend die Ölaustrittstemperatur ($T_A^*$) am Gleitlager (1), als Ausgangsgröße (y) berechnet und heranzieht, um diese mit einer sensortechnisch gemessenen Ölaustrittstemperatur ($T_A$) des Gleitlagermodells (N-V-F) abzugleichen.

11. System nach Anspruch 9, **dadurch gekennzeichnet, dass** das Gleitlagermodell (N-V-F) aus zumindest dem Drehmoment (M), der Drehzahl (n) als Eingangsgrößen (u) zumindest eine Zustandsgröße, mindestens umfassend den Lagerspalt (s) im Gleitlager (1), als Ausgangsgröße (y) berechnet und heranzieht, um diese mit einer sensortechnisch gemessenen Lagerspalt (s) zum Plausibilisieren des Gleitlagermodell (N-V-F) abzugleichen.

12. System nach Anspruch 9, **dadurch gekennzeichnet, dass** dem Verschleißmodell (VS) im Zuge des Abgleichens Kenngrößen zum Tribologischen Regime des Gleitlagers (1) zugeführt werden, wobei das Verschleißmodell (VS) mindestens eine der folgenden Funktionen beinhaltet:

     - Verschleißkennfeld, in welchem für Betriebszustände des Gleitlagers (), umfassend Gleitgeschwindigkeit und Lagerspalt, eine aus Versuchen gewonnene Verschleißrate hinterlegt,
     - physikalische Verschleißmodelle, umfassend Modelle zur Beschreibung der Oberflächenstruktur und dessen Berücksichtigung im Gleitlagermodell (N-V-F);
     - probabilistische Verschleißmodelle, als anhand von Versuchen trainierte neuronale Netze.

13. System nach Anspruch 9, **dadurch gekennzeichnet, dass** eine aus dem Verschleißmodell (VS) ermittelte Verschleißrate akkumuliert wird, wobei eine Akkumulationseinheit (Akk) zumindest eine der folgenden Funktionen ausführt:

     - kontinuierliche oder diskrete Akkumulation des ortsabhängigen Verschleißes des Gleitlagers (1);
     - Mitführen eines aktuellen Geometriemodells des Gleitlagers (1) aus dem ermittelten Verschleiß.

14. System nach mindestens einem der Ansprüche 9 bis 13, **dadurch gekennzeichnet, dass** eine Ausgabeeinheit (AE) zum Interpretieren der Ergebnisse aus dem Gleitlagermodell (N-V-F), der Akkumulationseinheit (Akk) und/ oder des Verschleißmodell (VS) vorgesehen ist, um im Rahmen der Zustandsüberwachung mindestens eine der nachfolgenden Funktionen auszuführen:

     - Warnung (W), falls der Verschleiß in einem Lagerbereich des Gleitlagers zuvor festgesetzte Grenzwerte überschreitet;
     - Ableiten von Handlungsempfehlungen für die Betriebssteuerung der Maschine oder Anlage;
     - Diagnosefunktionen für das Systems;
     - Statistikinformationen zum Betriebsverhalten der Maschine oder Anlage;
     - Historie des Verschleißfortschritts über die Zeit mit Trendanalyse und Prognose des Wartungsbedarfs.

15. Windkraftanlage, umfassend ein System zur Zustandsüberwachung eines mit Schmieröl betriebenen Gleitlagers nach einem der Ansprüche 9 bis 14.

16. Computerprogrammprodukt mit Programmcodemitteln zur Durchführung einer Zustandsüberwachung eines Gleitlagers gemäß des Verfahrens nach einem der Ansprüche 1 bis 8, wenn das Computerprogrammprodukt auf einer softwaregesteuerten elektronischen Steuereinheit (ECU) eines Systems gemäß der Ansprüche 9 bis 14 oder einer Cloud-Plattform abläuft.

## Claims

1. Method for monitoring the state of a sliding bearing (1) operated with lubricating oil for a rotating component, in which a physical variable that is characteristic of the bearing is measured by at least one sensor (2) and is fed to a control unit (ECU) for state monitoring, **characterized by** the following steps:

     - from at least one physical sliding bearing model (N-V-F) to which at least the rotational speed (n) and the torque (M) are fed as input variables (u: n, M, T_sump), the control unit (ECU) determines at least one state variable (s; T; p) of the sliding bearing (1) and/or of the lubricating oil as output variable (y);
     - using at least one sensor (2), measurement values are ascertained and output variables y are correlated with measurement values, the output vector containing state variables (s; T; p);
     - from a comparison of the measured value of the state variable (s; T; p) with the value of the state variable (s; T; p) calculated in a model-based manner as output variables (y),

non-measurable or non-measured state variables of the sliding bearing are available for the state and function monitoring and also documentation (classification and storage) and subsequent interpretation.

2. Method according to Claim 1, **characterized in that** the sliding bearing model (N-V-F) relates an ideal model (N) for the nominal case to an identically constructed variable model (V) which is adapted to the real operating behaviour of the sliding bearing (1).

3. Method according to Claim 1 or 2, **characterized in that** the sliding bearing model (N-V-F) relates an ideal model (N) for the nominal case to an identically constructed fault model (F) for mapping with respect to characteristic fault states, the fault states being selected from a group comprising inadequate lubrication, altered oil viscosity and wear-related change in geometry at the sliding bearing (1).

4. Method according to Claim 2 and/or 3, **character-**

**ized in that** the ideal model (N) for the nominal case is related to the variable model (V) and/or the fault model (F) in order to determine the residuals as a difference between two models (N/V; N/F) compared with one another.

5. Method according to Claim 4, **characterized in that** a wear model (VS) is employed, the output values of which represent a measure of the wear state of the sliding bearing (1), wherein the operating behaviour of the machine or installation comprising the sliding bearing (1) is adapted by the control unit (ECU) according to the wear state.

6. Method according to Claim 5, **characterized in that** the operating behaviour of the machine or installation is adapted by the control unit (ECU) by virtue of the fact

   - that, once a predefined limit value or threshold value characterizing the wear state of the sliding bearing (1) has been reached, the bearing load (F) acting thereon is reduced and/or the rotational speed (n) is increased in order to achieve a smoothing of bearing running surfaces, and/or
   - that upon the reaching of a limit value or threshold value for a physical variable characterizing a critical operating state or dimensionless indicator is converted into a predefined control parameter, in particular the maximum permissible temperature of the sliding bearing (1), whereupon the control unit (ECU) adapts the operating behaviour.

7. Method according to Claim 1, **characterized in that** the rotational speed (n) and/or the torque (M) are/is ascertained as input variables (u) by a measurement in the power flow upstream or downstream of the sliding bearing (1) by means of dynamic load measurement (DLM).

8. Method according to Claim 1, **characterized in that** the minimum gap thickness ($s_{min}$) of the sliding bearing (1) is calculated on the basis of the ascertained temperature ($T_A$; $T_S$) of the sliding bearing (1), the rotational speed (n) of the rotating component and the bearing load (F) by orbit analysis.

9. System for monitoring the state of a sliding bearing (1) operated with lubricating oil, in which a physical variable that is characteristic of the bearing is measured by at least one sensor (2) and is fed to a control unit (ECU) for state monitoring, wherein the following steps are carried out:

   - from at least one physical sliding bearing model (N-V-F) to which at least the rotational speed (n) and the torque (M) are fed as input variables (u) and which assigns a dynamic behaviour of the lubricating oil to these input variables (u), the control unit (ECU) determines at least one state variable (s; T; p) of the sliding bearing (1) and/or of the lubricating oil as output variable (y);
   - using at least one sensor (2), a comparison value for at least one of the state variables (s; T; p) is measured;
   - from a comparison of the measured value of the state variable (s; T; p) with the value of the state variable (s; T; p) calculated in a model-based manner as output variables (y), there is an evaluation of the extent to which the physical sliding bearing model (N-V-F) maps the real behaviour of the sliding bearing (1), comprising at least one sensor (2) for measuring a state variable (s; T; p) of the sliding bearing (1) and an electronic control unit (ECU) for the model-based state monitoring of the sliding bearing (1), containing a physical sliding bearing model (N-V-F).

10. System according to Claim 9, **characterized in that** for the purpose of plausibilization the sliding bearing model (N-V-F) calculates, from at least the torque (M) and the rotational speed (n) as input variables (x), at least one state variable, at least comprising the oil outlet temperature ($T_A$*) at the sliding bearing (1), as output variable (y) and uses it to correlate the latter with an oil outlet temperature ($T_A$) of the sliding bearing model (N-V-F) as measured by way of sensor technology.

11. System according to Claim 9, **characterized in that** the sliding bearing model (N-V-F) calculates, from at least the torque (M) and the rotational speed (n) as input variables (u), at least one state variable, at least comprising the bearing gap (s) in the sliding bearing (1), as output variable (y) and uses it to correlate the latter with a bearing gap (s) measured by way of sensor technology for the plausibilization of the sliding bearing model (N-V-F).

12. System according to Claim 9, **characterized in that** in the course of correlating, characteristic variables concerning the tribological regime of the sliding bearing (1) are fed to the wear model (VS), the wear model (VS) including at least one of the following functions:

   - a wear characteristic map in which a wear rate obtained from experiments is stored for operating states of the sliding bearing (1), comprising sliding speed and bearing gap,
   - physical wear models, comprising models for describing the surface structure and the consideration thereof in the sliding bearing model (N-V-F);

- probabilistic wear models, as neural networks trained on the basis of experiments.

13. System according to Claim 9, **characterized in that** a wear rate ascertained from the wear model (VS) is accumulated, wherein an accumulation unit (Akk) performs at least one of the following functions:

   - continuous or discrete accumulation of the location-dependent wear of the sliding bearing (1);
   - carrying along an up-to-date geometry model of the sliding bearing (1) from the ascertained wear.

14. System according to at least one of Claims 9 to 13, **characterized in that** provision is made of an output unit (AE) for interpreting the results from the sliding bearing model (N-V-F), the accumulation unit (Akk) and/or the wear model (VS) in order to perform at least one of the following functions in the context of the state monitoring:

   - warning (W) if the wear in a bearing region of the sliding bearing exceeds previously set limit values;
   - deriving recommended actions for the operational control of the machine or installation;
   - diagnostic functions for the system;
   - statistical information concerning the operating behaviour of the machine or installation;
   - history of the progress of wear over time with trend analysis and prediction of maintenance requirements.

15. Wind power installation, comprising a system for monitoring the state of a sliding bearing operated with lubricating oil according to any of Claims 9 to 14.

16. Computer program product comprising program code means for carrying out state monitoring of a sliding bearing in accordance with the method according to any of Claims 1 to 8 when the computer program product is executed on a software-controlled electronic control unit (ECU) of a system according to Claims 9 to 14 or a cloud platform.

## Revendications

1. Procédé de surveillance de l'état d'un palier lisse (1), fonctionnant avec une huile lubrifiante et destiné à un composant rotatif, procédé dans lequel une grandeur physique caractéristique du palier est mesurée au moyen d'au moins un capteur (2) et est fournie à une unité de commande (ECU) afin de surveiller l'état, **caractérisé par** les étapes suivantes :

   - au moins une grandeur d'état (s ; T ; p) du palier lisse (1) et/ou de l'huile lubrifiante est déterminée comme grandeur de sortie (y) par l'unité de commande (ECU) à partir d'au moins un modèle de palier lisse physique (N-V-F) auquel sont fournis comme grandeur d'entrée (u :n, M, T_Sumpf) au moins la vitesse de rotation (n) ainsi que le couple (M) ;
   - des valeurs de mesure sont déterminées avec au moins un capteur (2) et des grandeurs de départ y sont comparées à des valeurs de mesure, le vecteur de sortie contenant des grandeurs d'état (s ; T ; p) ;
   - à partir d'une comparaison de la valeur de mesure de la grandeur d'état (s ; T ; p) à la valeur, basée sur un modèle, de la grandeur d'état (s ; T ; p) calculée comme grandeur de sortie (y), des grandeurs d'état, non mesurables ou non mesurées, du palier lisse sont disponibles en vue de la surveillance d'état et de fonctionnement ainsi que de la documentation (classification et mémorisation) et de l'interprétation ultérieure.

2. Procédé selon la revendication 1, **caractérisé en ce que** le modèle de palier lisse (N-V-F) établit une relation entre un modèle idéal (N) destiné au cas nominal et un modèle variable (V) qui est construit de manière similaire et qui est adapté au comportement de fonctionnement réel du palier lisse (1).

3. Procédé selon la revendication 1 ou 2, **caractérisé en ce que** le modèle de palier lisse (N-V-F) établit une relation entre un modèle idéal (N) destiné au cas nominal et un modèle d'erreur (F) qui est construit de manière similaire et qui est destinée à la reproduction en termes d'états d'erreur caractéristiques, les états d'erreur étant choisis dans un groupe comprenant une lubrification insuffisante, une viscosité d'huile modifiée, un changement de géométrie lié à l'usure au niveau du palier lisse (1).

4. Procédé selon la revendication 2 et/ou 3, **caractérisé en ce que** le modèle idéal (N) destiné au cas nominal est mis en relation avec le modèle variable (V) et/ou le modèle d'erreur (F) afin de déterminer les résidus comme différence entre deux modèles (N/V ; N/F) comparés entre eux.

5. Procédé selon la revendication 4, **caractérisé en ce qu'**un modèle d'usure (VS) est utilisé dont les valeurs de sortie représentent une mesure de l'état d'usure du palier lisse (1), le comportement de fonctionnement de la machine ou de l'installation comprenant le palier lisse (1) étant adapté par l'unité de commande (ECU) en fonction de l'état d'usure.

6. Procédé selon la revendication 5, **caractérisé en ce qu'**une adaptation du comportement de fonctionnement de la machine ou de l'installation est effectuée par l'unité de commande (ECU) **en ce que**

- lorsqu'une valeur limite ou valeur seuil prédéfinie, qui caractérise l'état d'usure du palier lisse (1), est atteinte, la charge de palier (F) agissant sur celle-ci est réduite et/ou la vitesse de rotation (n) est augmentée afin d'obtenir un lissage des surfaces de roulement de palier, et/ou

- lorsqu'une valeur limite ou valeur seuil pour une grandeur physique qui caractérise un état de fonctionnement critique ou un indicateur adimensionnel est convertie en un paramètre de commande prédéfini, en particulier la température maximale admissible du palier lisse (1), sur la base duquel l'unité de commande (ECU) adapte le comportement de fonctionnement.

7. Procédé selon la revendication 1, **caractérisé en ce que** la vitesse de rotation (n) et/ou le couple (M) sont déterminés comme grandeurs d'entrée (u) par une mesure effectuée dans le flux de puissance avant ou après le palier lisse (1) à l'aide d'une mesure de charge dynamique (DLM).

8. Procédé selon la revendication 1, **caractérisé en ce que** l'épaisseur de fente minimale ($S_{min}$) du palier lisse (1) est calculée par analyse d'orbite en fonction de la température déterminée ($T_A$ ; $T_S$) du palier lisse (1), de la vitesse de rotation (n) du composant en rotation et de la charge de palier (F).

9. Système de surveillance d'état d'un palier lisse (1) qui fonctionne avec un huile lubrifiante, système dans lequel une grandeur physique caractéristique du palier est mesurée avec au moins un capteur (2) et est fournie à une unité de commande (ECU) en vue de la surveillance d'état, les étapes suivantes étant réalisées :

- au moins une grandeur d'état (s ; T ; p) du palier lisse (1) et/ou de l'huile lubrifiante est déterminée comme grandeur de sorte (y) par l'unité de commande (ECU) à partir d'au moins un modèle de palier lisse physique (N-V-F) auquel au moins la vitesse de rotation (n) et le couple (M) sont fournis comme grandeurs d'entrée (u) et qui associe un comportement dynamique de l'huile lubrifiante à ces grandeurs d'entrée (u) ;
- une valeur de comparaison pour au moins une des grandeurs d'état (s ; T ; p) est mesurée à l'aide d'au moins un capteur (2) ;
- à partir de la comparaison de la valeur mesurée de la grandeur d'état (s ; T ; p) à la valeur de la grandeur d'état (s ; T ; p) qui a été calculée comme grandeur de sortie (y) sur la base d'un modèle, une évaluation est effectuée pour déterminer dans quelle mesure le modèle de palier lisse physique (N-V-F) reproduit le comportement réel du palier lisse (1), comprenant au moins un capteur (2) destiné à mesurer une grandeur d'état (s ; T ; p) du palier lisse (1) et une unité de commande électronique (ECU) destinée à surveiller, sur la base d'un modèle, l'état du palier lisse (1) contenant un modèle de palier lisse physique (N-V-F) .

10. Système selon la revendication 9, **caractérisé en ce que**, pour vérifier la plausibilité, le modèle de palier lisse (N-V-F) calcule au moins une grandeur d'état, comprenant au moins la température de sortie d'huile ($T_A$*) comme grandeur de sortie (y) au moins à partir du couple (M), de la vitesse de rotation (n) comme grandeurs d'entrée (x), et l'utilise pour la comparer à une température de sortie d'huile ($T_A$) du modèle de palier lisse (N-V-F) mesurée par des capteurs.

11. Système selon la revendication 9, **caractérisé en ce que** le modèle de palier lisse (N-V-F) calcule au moins à partir du couple (M), de la vitesse de rotation (n) comme grandeurs d'entrée (u) au moins une grandeur d'état, comprenant au moins la fente de palier (s) dans le palier lisse (1), comme grandeur de sortie (y) et l'utilise pour la comparer à une fente de palier (s) mesurée par des capteurs afin de vérifier la plausibilité du modèle de palier lisse (N-V-F).

12. Système selon la revendication 9, **caractérisé en ce que** des grandeurs caractéristiques du régime tribologique du palier lisse (1) sont fournies au modèle d'usure (VS) au cours de la comparaison, le modèle d'usure (VS) contenant au moins une des fonctions suivantes :

- diagramme caractéristique d'usure, dans lequel est stocké un taux d'usure obtenu à partir d'essais pour les états de fonctionnement du palier lisse (1), incluant la vitesse de glissement et la fente de palier,
- des modèles d'usure physiques, incluant des modèles permettant de décrire la structure de surface et de la prendre en compte dans le modèle de palier lisse (N-V-F) ;
- des modèles d'usure probabilistes, sous la forme de réseaux neuronaux entraînés sur la base d'essais.

13. Système selon la revendication 9, **caractérisé en ce qu'**un taux d'usure déterminé à partir du modèle d'usure (VS) est accumulé, une unité d'accumulation (Akk) remplissant au moins une des fonctions suivantes :

- accumulation continue ou discrète de l'usure du palier lisse (1) en fonction de l'emplacement ;

- réalisation d'un modèle de géométrie actuelle du palier lisse (1) à partir de l'usure déterminée.

14. Système selon l'une au moins des revendications 9 à 13, **caractérisé en ce qu'**une unité de sortie (AE) est prévue pour interpréter les résultats du modèle de palier lisse (N-V-F), de l'unité d'accumulation (Akk) et/ou du modèle d'usure (VS) afin de remplir au moins une des fonctions suivantes dans le cadre de la surveillance d'état :

> - avertir (W) si l'usure d'une zone du palier lisse dépasse les valeurs limites préalablement fixées ;
> - déduire des recommandations d'action pour commander le fonctionnement de la machine ou de l'installation ;
> - fonctions de diagnostic du système ;
> - informations statistiques sur le comportement de fonctionnement de la machine ou de l'installation ;
> - historique de l'évolution de l'usure dans le temps avec analyse des tendances et prévision des besoins de maintenance.

15. Installation éolienne, comprenant un système de surveillance de l'état d'un palier lisse fonctionnant avec une huile lubrifiante selon l'une des revendications 9 à 14.

16. Produit de programme d'ordinateur comprenant des moyens de code de programme destinés à effectuer une surveillance de l'état d'un palier lisse selon le procédé selon l'une des revendications 1 à 8, si le produit de programme d'ordinateur fonctionne sur une unité de commande électronique (ECU), commandée par logiciel, d'un système selon les revendications 9 à 14 ou une plateforme Cloud.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110188988 A1
- US 20120068460 A1
- EP 2048562 A1
- DE 3117060 A1
- WO 2014174097 A1
- US 2011188988 A1
- WO 2011023209 A1
- AT 7889 U2